# EUROPÄISCHE PATENTSCHRIFT

(11) **EP 2 154 381 B1**
(45) Veröffentlichungstag und Bekanntmachung des Hinweises auf die Patenterteilung: **30.08.2017**
(21) Anmeldenummer: 09009106.7
(22) Anmeldetag: 13.07.2009
(51) Int. Cl.: F15B 19/00, F16K 37/00

(54) **Verfahren zum Überprüfen der Funktionsweise eines prozesstechnischen Feldgeräts und prozesstechnisches Feldgerät**
Method of checking the operation of a process field device and process field device
Procédé de contrôle du type de fonctionnement d'un appareil de terrain et appareil de terrain

(30) Priorität: 11.08.2008 DE 102008037302
(43) Veröffentlichungstag der Anmeldung: 17.02.2010
(73) Patentinhaber: Samson AG, 60314 Frankfurt (DE)
(72) Erfinder: Somfalvy, Peter, 63486 Bruchköbel (DE)
(74) Vertreter: Schmid, Nils T.F.

(56) Entgegenhaltungen:
- EP-B1- 2 132 472
- DE-A1- 4 429 401
- DE-A1-102005 024 686
- US-A- 6 112 638
- US-A1- 2005 274 417
- US-A1- 2007 183 901

## Beschreibung

Die Erfindung betrifft ein Verfahren zum Überprüfen der Funktionsweise eines prozesstechnischen Feldgeräts gemäß dem Oberbegriff des Hauptverfahrensanspruchs sowie ein prozesstechnisches Feldgerät gemäß dem Oberbegriff des Hauptvorrichtungsanspruchs.

Als Feldgerät der Prozesstechnik ist eine Steuer- und/oder Regelungseinrichtung zu verstehen, welche einen sogenannte Aktor oder ein Stellgerät einer prozesstechnischen Anlage ansteuert. Ein Stellgerät besteht beispielsweise aus einem Stellantrieb und einen von dem Stellantrieb zu betätigenden Stellventil, das häufig zur Regelung eines Fluidstroms der prozesstechnischen Anlage eingesetzt wird. Aufgrund strenger Sicherheitsbestimmungen insbesondere in der Verfahrenschemietechnik, wie der Petrochemietechnik, oder der Energietechnik, wie der Kerntechnik, ist sicherzustellen, dass das Stellgerät eine Sicherheitsstellung für das Stellventil einnimmt und beispielsweise sich vollständig öffnet oder schließt, um einer Notsituation der Anlage zu begegnen. Im Allgemeinen wird das Stellgerät unter Einsatz einer Hilfsenergie, wie Elektrizität, Hydraulik oder Pneumatik, betrieben.

Im Besonderen betrifft die Erfindung ein als Stellungsregler ausgebildetes prozesstechnisches Feldgerät zum Ansteuern eines Stellgeräts bestehend aus einem pneumatischen Antrieb und einem durch den Antrieb stellbaren Stellventil.

Die Sicherheitsstellung, die bei Ausfall der Hilfsenergie oder bei Empfang eines bestimmten Sicherheitssignals das Stellgerät erreichen soll, wird bei einem pneumatischen Antrieb, der an eine konstante Luftdruckquelle als Hilfsenergiequelle von beispielsweise 6 bar anschließbar ist mittels Druck vorgespannter Federn realisiert, welche deren gespeicherte potentielle Energie abgeben, sobald der pneumatische Stellantrieb durch das Feldgerät von der Druckluftquelle getrennt ist und entlüftet wird. In diesem Fall entspricht die Entlüftung dem vom Feldgerät an den pneumatischen Antrieb abgegebenen, pneumatischen Sicherheits-Steuersignal.

Ein Feldgerät, das zum Ansteuern eines pneumatisch betriebenen Stellgeräts verwendet wird, kann bei einer vereinfachten Ausführung ein I/P-Wandler sein, der üblicherweise normierte pneumatische Ausgangssignale zwischen 0,2 bis 1 bar oder 0,4 bis 2 bar abhängig von dem empfangenden elektrischen Steuersignal erzeugt, um den pneumatischen Stellantrieb entsprechend zu steuern. Für das Erreichen der Sicherheitsstellung ist es bei pneumatischen Stellantrieben notwendig diesen zu entlüften, das heißt das Ausgangssignal des I/P-Wandlers nahezu auf 0 abzusenken, was üblicherweise der I/P-Wandler dann tut, wenn er ein elektrisches NullSignal oder zumindest ein Signal unterhalb eines spezifischen Schwellwertes empfängt.

Aus DE 44 29 401 C2 ist ein als Stellungsregler ausgeführtes Feldgerät bekannt, das einen pneumatischen Stellantrieb aufweist. Das Feldgerät umfasst einen I/P-Wandler als sogenannte Vorsteuerstufe. Auf einem elektrischen Ansteuerweg zwischen einer Stellungsregler-Elektronik und dem I/P-Wandler ist eine durch ein Relais gebildete Sicherheitsschaltung vorgesehen, welche bei einer Betriebsstörung eine elektrische Ansteuerleitung hin zu dem I/P-Wandler trennt. Auf diese Weise nimmt der I/P-Wandler den Sicherheitsbetriebszustand an und entlüftet den pneumatischen Stellantrieb. Die Stellungsregler-Elektronik wird fortlaufend über ein normgemäßes 4 bis 20 mA-Steuersignal energetisch versorgt, und zwar nach dem sogenannten "Live-Zero"-Prinzip. Durch die Relais-Sicherheitsschaltung wird der pneumatische Antrieb dann entlüftet, selbst wenn der Stellungsregler einen Stromsollwert deutlich höher als 4 mA empfängt. Eine elektrische Energieversorgung für die Stellungsregler-Elektronik bleibt stets gewährleistet, auch wenn das Feldgerät eine Sicherheitsstellung durch Entlüftung sicherstellen soll.

DE 10 2005 024 686 A1 offenbart einen Stellungsregler, bei dem ein elektrisch ansteuerbarer Sicherheitsschalter dem I/P-Wandler unmittelbar vorgeschaltet ist. Der Sicherheitsschalter hat die Aufgabe, ein sicheres Stromlosschalten des I/P-Wandlers zu gewährleisten. Der Sicherheitsschalter besteht vorzugsweise aus Elektronikkomponenten hoher Zuverlässigkeit und empfängt das Eingangssignal des Stellungsreglers. Liegt die Spannung bzw. der Strom des Eingangssignals oberhalb eines festgelegten Wertes, wie 4,5 mA oder 4 mA, dann wird der I/P-Wandler durch einen Mikroprozessor des Stellungsreglers angesteuert. Sinkt die Spannung bzw. der Strom des Eingangssignals unter den festgelegten Wert, so wird der Eingang des I/P-Wandlers durch den Sicherheitsschalter stromlos gestellt, was den pneumatischen Antrieb entlüften lässt.

Der bewährte Stellungsregleraufbau gemäß DE 10 2005 024 686 erreicht den Vorteil einer einfachen Sicherheitszertifizierbarkeit. Der Stellungsregler ist sicherheitstechnisch auf den Sicherheitsschalter reduziert, der aus zuverlässigen und leicht überprüfbaren Elektronikkomponenten zusammengesetzt ist. Eine Zertifizierung eines Mikroprozessors für den Stellungsregler wäre weitaus schwieriger, weil die Ausfallwahrscheinlichkeit des Mikroprozessors von vielen Betriebsumständen abhängen kann.

US 6 112 638 A betrifft einen elektropneumatischen Positionierer mit einem externen binären Eingabeblock, der einen Zugriff auf die elektrische Ausgabe eines integrierten elektronischen Positionsreglers zur Kontrolle des Betriebs eines Ventil-Relais bereitstellt.

Es ist Aufgabe der Erfindung, ein Verfahren zum Überprüfen einer Funktionsweise eines prozesstechnischen Feldgeräts und ein prozesstechnisches Feldgerät dahingehend zu verbessern, dass eine verbesserte Diagnose von Bestandteilen des Feldgeräts und damit eine möglichst einfache Zertifizierung ermöglicht wird.

Diese Aufgabe wird durch die Merkmale des unabhängigen Verfahrensanspruchs und des unabhängigen Vorrichtungsanspruchs gelöst.

Danach sind ein Verfahren zum Überprüfen der Funktionsweise eines prozesstechnischen Feldgeräts sowie ein prozesstechnisches Feldgerät vorgesehen, das ein mit Hilfe einer Hilfsenergie betriebenes Stellgerät einer prozesstechnischen Anlage steuert. Für eine prozesstechnische Anlage, die einer explosionsträchtigen Umgebung ausgesetzt ist, sind Stellgeräte beispielsweise zündeigensicher ausgebildet. Häufig werden als Antriebe pneumatische Antriebe verwendet, die mittels eines Federspeichers auf einfache Weise eine Sicherheitsstellung garantieren und weiterhin keine Explosionsgefährdung verursachen. Dieser Antrieb betätigt mechanisch das Stellventil. Das erfindungsgemäße Feldgerät hat einen Strom-Hilfsenergie-Wandler, wie einen I/P-Wandler, der ein vorbestimmtes Hilfsenergiesicherheitssignal abgeben kann, um das Stellgerät in eine vorbestimmte Sicherheitsstellung zu bringen. Bei einem I/P-Wandler ist das Hilfsenergiesicherheitssignal die Entlüftung des pneumatischen Stellantriebs durch den I/P-Wandler, also ein Entlüftungssignal oder pneumatisches Nullsignal. Ein Hilfsenergiestellsignal bei pneumatischen Stellungsreglern ist folglich das pneumatische von dem Strom-Druck-Wandler eingestellte und an den pneumatischen Antrieb abzugebene Signal zum Verfahren des Stellventils.

Des Weiteren umfasst das erfindungsgemäße Feldgerät eine dem Strom/Hilfsenergiewandler vorgeschaltete, elektrische Sicherheitsschaltung, die abhängig von einem am Feldgerät eingehenden elektrischen Steuer- und/oder Regelsignal von einem passiven Schaltzustand in einen aktiven Schaltzustand gebracht werden kann, indem die elektrische Sicherheitsschaltung den Strom/Hilfsenergie-Wandler veranlasst, das Hilfsenergiesicherheitssignal abzugeben. Üblicherweise wird das elektrische Steuer- und/oder Regelsignal von einer dem Stellgerät übergeordneten Prozessleiterstelle erzeugt. In dem passiven Schaltzustand leitet die Sicherheitsschaltung das Steuer- und/oder Regelsignal vorzugsweise unverändert an den Strom/Hilfsenergie-Wandler, der ein entsprechendes Hilfsenergiesteuersignal an das Stellgerät abgibt. Erfindungsgemäß gelangt die Sicherheitsschaltung dann selbständig in den aktiven Schaltzustand, wenn das elektrische Steuer- und/oder Regelstellsignal einen für die Sicherheitsschaltung spezifische Stromstärken- und/oder Spannungsschwellenwert unter- oder überschreitet. Beispielsweise kann die Sicherheitsschaltung als Relais ausgeführt sein.

Erfindungsgemäß soll ein der Sicherheitsschaltung zuzuführendes elektrisches Signal innerhalb des Stellgeräts, also nach dem Stellgeräteeingang und nach Empfang am Stellgerät, feldgerätindividuell abgeändert werden. Hierfür ist erfindungsgemäß in dem Feldgerät eine zusätzliche Prüfelektronik derart eingebaut, dass sie das am Feldgerät empfangene elektrische Steuer- und/oder Regelstellsignal, das zur Weiterleitung an die Sicherheitsschaltung bestimmt ist, sicherheitsschaltungsindividuell verändert, wodurch ein feldgerätindividuelles elektrisches Prüfsignal speziell für die Sicherheitsschaltung bereitgestellt wird.

Das empfangene Steuer- und/oder Regelstellsignal, das auch für andere Elektronikkomponenten innerhalb des Stellgeräts, wie einen Mikroprozessor, bestimmt sein kann, soll für diese Komponente trotz der Änderung für die Sicherheitsschaltung unverändert bleiben. Mit Hilfe des sicherheitsschaltungsindividuellen Prüfsignals wird die Sicherheitsschaltung und die durch die Sicherheitsschaltung beeinflussten Bauteile des Feldgeräts auf Funktion überprüft.

Die erfindungsgemäße Lehre baut auf der Erkenntnis auf, dass der bekannte Feldgerätaufbau mit einer dem Strom/Hilfsenergie-Wandler zugeordneten Sicherheitsschaltung eine einfache Zertifizierung ermöglicht, weil durch die Abspaltung der Notstellungsfunktion des Feldgeräts von einem Mikroprozessor weg hin zu einer Sicherheitsschaltung die Ausfallwahrscheinlichkeit des Feldgeräts aufgrund der Einfachheit der Sicherheitsschaltungskomponenten reduziert ist. Es zeigte sich, dass bei Stellungsreglern einer Hilfsenergiesicherheitssignalerzeugung mittels des Mikroprozessors eine Zertifizierung nur sehr schwer und nur mit einem hohen Prüfaufwand erreichbar ist, weil die Gründe des Ausfalls der Mikroprozessoren komplex sind. Mit der erfindungsgemäßen zusätzlichen feldgerätindividuellen, der Sicherheitsschaltung unmittelbar zugeordneten Prüfelektronik, welche die Funktionsweise der Sicherheitsschaltung beliebig häufig überprüfen lässt, wird der Aufwand für eine Zertifizierung, deutlich reduziert, wobei die Ausfallwahrscheinlichkeit aussagesicherer bestimmbar und verringerbar ist. Die sicherheitsschaltungsindividuelle Veränderung des am Feldgerät empfangenen elektrischen Steuer- und/oder Regelstellsignals durch die Prüfelektronik zur Bildung des Prüfsignals ermöglicht es, das gleiche Steuer- und/oder Regelstellsignal für andere Elektronikkomponenten des Stellungsreglers unverändert zu belassen, wodurch die Energieversorgung für diese Elektronikkomponenten zu Diagnosezwecken weiterhin bestehen bleibt, obwohl eine Funktionsdiagnose durch Stromlosstellen des Strom/Hilfsenergie-Wandlers einhergeht.

Bei einer bevorzugten .Ausführung der Erfindung ist das am Feldgerät empfangene elektrische Steuer- und/oder Regelstellsignal sowohl an der elektrischen Sicherheitsschaltung als auch an wenigstens einer weiteren Elektronikkomponente des Feldgeräts, insbesondere einem Mikroprozessor, angelegt. Das kann beispielsweise durch eine entsprechende Parallelschaltung realisiert werden. Entsprechend kann das am Feldgeräteingang empfangene, elektrische Steuer- und/oder Regelstellsignal in zwei gleiche identische Signale kopiert werden, wobei nur das für die elektrische Sicherheitsschaltung vorgesehene elektrische Signal zur Bildung des Prüfsignals abgeändert wird. Das für die wenigstens eine weitere Elektronikkomponente bestimmte elektrische Steuersignal bleibt unverändert.

Bei einer Weiterbildung der Erfindung wird ein steuerbarer Umfang der Änderung der eingegangenen Stromstärke und/oder -spannung des Prüfsignals insbesondere manuell oder von einem Mikroprozessor vordefiniert eingestellt. Dabei kann der Änderungsumfang stufenlos oder in Schritten vonstattengehen. Auf diese Weise ist es möglich, sich einem sicherheitsschaltungsspezifischen Stromstärken- und/oder Spannungsschwellenwert der Sicherheitsschaltung allmählich zu nähern, um den Betriebsaugenblick zu bestimmen, wann die Sicherheitsschaltung anspricht und in den aktiven Prüfzustand übergeht.

Bei einer bevorzugten Ausführung der Erfindung wird das erfindungsgemäße Verfahren feldgerätindividuell beispielsweise manuell und/oder über eine dem Feldgerät übergeordnete Prozessleitstelle initiiert. Der zeitliche Ablauf des erfindungsgemäßen Verfahrens wird allerdings von einem Mikroprozessor des Feldgeräts bestimmt. Dieser stellt ein, wann und/oder in welchem Umfang das empfangene Steuer- und/oder Regelstellsignal geändert wird. Auf diese Weise können unterschiedliche Prüfsignale feldgerätindividuell erzeugt werden.

Bei einer bevorzugten Ausführung der Erfindung wird ein Wert der an der elektrischen Sicherheitsschaltung anliegenden geänderten Eingangsstromstärke und/oder -spannung des Prüfsignals gemessen und insbesondere an einem Mikroprozessor des Feldgeräts weitergeleitet. Auf diese Weise kann zu jeder Betriebszeit der prozesstechnischen Anlage festgestellt werden, welche Prüfsignale der Sicherheitsschaltung zugeführt wurden. Auf diese Weise ist es möglich, eine umfangreiche Diagnose der Funktionsweise der Sicherheitsschaltung durchzuführen.

Bei einer Weiterbildung der Erfindung wird ein Wert der an der elektrischen Sicherheitsschaltung anzulegenden, geänderten Eingangsstromstärke und/oder -spannung gemessen und festgestellt. Diese wird zur Archivierung und Weiterverarbeitung einem Mikroprozessor des Feldgeräts weitergeben. Dabei kann weiterhin festgestellt werden, ob und/oder ab welchem Wert der an der elektrischen Sicherheitsschaltung anliegende Eingangsstromstärke und/oder -spannung das Stellgerät in die Sicherheitsstellung verfährt, insbesondere das Hilfsenergiesicherheitssignal von dem Strom/Hilfsenergie-Wandler abgegeben wird. Vorzugsweise wird der festgestellte Wert mit dem sicherheitsschaltungsspezifischen Stromstärken- und/oder Spannungsschwellenwert verglichen.

Der Wert der an der elektrischen Sicherheitsschaltung anliegenden Eingangsstromstärke und/oder -spannung, der zum Auslösen der Sicherheitsstellung bzw. zur Rückkehr in den Normalbetrieb führt, kann alternativ festgestellt werden, indem gleichzeitig zur Messung der Eingangsstromstärke der Sicherheitsschaltung ein Positionssensor die Sicherheitsposition des Stellgerätes überwacht und damit die Schaltpunkte der Sicherheitsschaltung beobachtet werden. Eine Veränderung dieser Schaltpunkte ist ein Maß für eine veränderte Funktionsfähigkeit der Sicherheitsabschaltung.

Bei einer Weiterbildung der Erfindung wird ein Warnsignal ausgegeben, wenn der gemessene Wert der an der elektrischen Sicherheitsschaltung anliegende Eingangsstromstärken- und/oder -spannung außerhalb eines vorbestimmten Toleranzbereichs liegt, der beispielsweise in einem Speicher des Mikroprozessors eingegeben ist. Ein Warnsignal kann auch ausgegeben werden, wenn der an der Sicherheitsschaltung gemessene Eingangsstromstärken- und/oder - spannungswert einen vorbestimmten Mindestwert unter- und/oder überschreitet, ohne dass Stellgerät in die Sicherheitsstellung verfahren ist, insbesondere das Hilfsenergiesicherheitssignal abgegeben wurde.

Bei einer spezifischen Ausführung der Erfindung liegt der sicherheitsschaltungsspezifische Stromsstärken-Schwellenwert bei etwa 4 mA. Bei Initiierung des Verfahrens wird das am Feldgeräteingang elektrische Steuer- und/oder Regelstellsignal größer als 4 mA vor dem Empfang an der elektrischen Sicherheitsschaltung auf einen Stromstärkewert im Bereich von etwa 4 mA oder darunter insbesondere kontinuierlich durch die erfindungsgemäße Prüfelektronik verringert.

Bei einer Weiterbildung der Erfindung teilt die elektrische Sicherheitsschaltung in dessen aktiven Schaltprüfzustand einem Strom/Druck-Wandler ein vorbestimmtes Live-Zero-Signal insbesondere mit einer Stromstärke von zwischen 0,0 und etwa 4 mA mit. Der Strom/Druck-Wandler lüftet auf das Live-Zero-Signal hin den pneumatische Antrieb des Stellgeräts, woraufhin das Stellgerät insbesondere durch Freigabe potentieller Federenergie in die Sicherheitsstellung gezwungen wird.

Des Weiteren betrifft die Erfindung ein prozesstechnisches Feldgerät, wie einen Stellungsregler zum Ansteuern eines durch eine Hilfsenergie, wie Pneumatik, betriebenen Stellgeräts. Das erfindungsgemäße prozesstechnische Feldgerät umfasst einen Eingang zum Empfangen eines elektrischen Steuer- und/oder Regelstellsignals, wie eines Live-Zero-Signals. Des Weiteren hat das Feldgerät einen Ausgang zum Abgeben des Hilfsenergieausgangssignals zum Steuern des Stellgeräts. Der Eingang und der Ausgang können strukturell durch Öffnungen in einem geschlossenen oder schließbaren Stellungsreglergehäuse ausgebildet sein. Das Hilfsenergieausgangssignal, beispielsweise im Falle eines pneumatisch betriebenen Stellgeräts ein pneumatisches Ausgangssignal, dient zum Stellen eines Antriebs des Stellgeräts. In einer Notsituation gibt das Stellgerät ein vorbestimmtes Hilfsenergiesicherheitssignal an das Stellgerät ab. Außerdem hat das erfindungsgemäße Feldgerät einen Strom/Hilfsenergie-Wandler, wie einen I/P-Wandler, der das von dem elektrischen Steuer- und/oder Regelstellsignal abhängende Hilfsenergieausgangssignal erzeugt. Das Steuer- und/oder Regelstellsignal wird üblicherweise von einer übergeordneten Prozessleitstelle hin zum Feldgerät und zum Strom/Hilfsenergie-Wandler geleitet, welcher das elektrische Signal in ein Hilfsenergieausgangssignal umwandelt.

Das erfindungsgemäße Feldgerät hat zudem eine zwischen dem Eingang und dem Strom/Hilfsenergie-Wandler angeordnete elektrische Sicherheitsschaltung, die abhängig von dem am Feldgerät empfangenen elektrischen Steuer- und/oder Regelstellsignal von einem passiven Schaltzustand in einen aktiven Schaltzustand gebracht werden kann. In dem aktiven Schaltzustand veranlasst die elektrische Sicherheitsschaltung den Strom/Hilfsenergie-Wandler, das Hilfsenergiesicherheitssignal abzugeben. Andere Signale können in dem aktiven Schaltzustand von dem Strom/Hilfsenergie-Wandler nicht an das Stellgerät weitergeleitet werden. Die Sicherheitsschaltung wird dann selbständig in den aktiven Schaltzustand zur ausschließlichen Weiterleitung des Hilfsenergiesicherheitssignals gebracht, wenn das elektrische Steuer- und/oder Regelstellsignal einen für die sicherheitsschaltungsspezifischen Stromstärken- und/oder Spannungsschwellenwert unter- oder überschreitet. In den meisten Anwendungsfällen von pneumatisch betriebenen Stellgeräten liegt der Stromstärkenschwellenwert bei 4 mA. Das erfindungsgemäße Feldgerät hat schließlich eine feldgerätindividuelle, dem Eingang nachgeschaltet und der elektrischen Sicherheitsschaltung vorgeschaltete, ansteuerbare Elektronik zum Prüfen der Funktionsweise des Feldgeräts. Die Prüfelektronik ist von einem passiven Ruhezustand in einem aktiven Prüfzustand schaltbar. In dem passiven Ruhezustand beeinflusst die Prüfelektronik die Funktionsweise des Feldgeräts nicht. Allerdings im aktiven Zustand ändert die Prüfelektronik das am Feldgerät empfangene und der elektrischen Sicherheitsschaltung zuzuführende, elektrische Steuer- und/oder Regelstellsignal, um ein elektrisches Prüfsignal festgelegter und/oder festlegbarer Stromstärke und/oder Spannung zu bilden. Das elektrische Prüfsignal ist ausschließlich für die Sicherheitsschaltung bestimmt und wird dieser zugeführt.

Bei einer bevorzugten Ausführung der Erfindung hat das Feldgerät einen Mikroprozessor als intelligente Elektronikkomponente für das Feldgerät. Der Mikroprozessor ist innerhalb des Feldgeräts über dessen Eingang derart mit dem Feldgeräteingang signalübertragungsgemäß gekoppelt, dass das elektrische Steuer- und/oder Regelstellsignal auch bei der in den Prüfzustand geschalteten Prüfelektronik zur Versorgung des Mikroprozessors mit elektrischer Energie im Wesentlichen unverändert bleibt. Dies bedeutet, dass das für den Mikroprozessor bestimmte Steuer- und/oder Regelstellsignal hinsichtlich dessen enthaltenen Energieniveaus sowie Dateninhalts auch im Prüfzustand unverändert bleibt. Das gleiche elektrische Steuer- und/oder Regelstellsignal, das für die Sicherheitsschaltung bestimmt ist, wird erfindungsgemäß geändert.

Bei einer bevorzugten Ausführung der Erfindung ist die Prüfelektronik für deren Umschaltung in den Prüfzustand und/oder zurück in den Ruhezustand durch den Mikroprozessor des Feldgeräts gesteuert. Es sei klar, dass die Umschaltung auch durch eine Bedienperson manuell insbesondere von der Außenseite in einem Gehäuse des Feldgeräts vorzugsweise durch manuelle Betätigung eines außenseitigen Bedienelements, wie eines Knopfs, ansteuerbar ist. Es sei auch denkbar, den Umschaltvorgang der Prüfelektronik vollautomatisch durchzuführen, indem der Mikroprozessor eine getaktete Routine aufweist, welche den Umschaltvorgang nach bestimmten Zeitzyklen automatisch durchführt.

Bei einer bevorzugten Weiterbildung der Erfindung senkt die Prüfelektronik in deren Prüfzustand die an der elektrischen Sicherheitsschaltung anliegende Stromstärke einstellbar ab. Wenn beispielsweise ein normales Betriebssteuersignal von der Prozessleitstelle dem Stellgerät zugeführt wird, das eine Stromstärke von 9 mA hat, wird bei Auslösung des Überprüfungsverfahrens das Steuersignal von 9 mA abgesenkt. Ist der sicherheitsschaltungsspezifische Schwellenwert bei 4 mA, so ist vorzugsweise die Prüfelektronik dazu ausgelegt, das 9 mA starke Fördersignal auf etwa 4 mA oder leicht darüber oder darunter zu senken, um zu überprüfen, ob und ab welchem Wert der Sicherheitsbetrieb am Stellgerät durch das Feldgerät eingestellt wird.

Bei einer bevorzugten Ausführung der Erfindung hat die Prüfelektronik einen insbesondere kontinuierlich veränderbaren Widerstand, insbesondere einen Strombegrenzungswiderstand, und/oder ein Halbleiterelement, insbesondere einen Feldeffekttransistor. Vorzugsweise hat die Prüfelektronik einen mit dem Widerstand und/oder dem Halbleiterelement in Reihe angeordneten Schalter zum Schalten zwischen dem Prüfzustand und Ruhezustand.

Bei eine bevorzugten Ausführung der Erfindung hat das Feldgerät eine zwischen dem Eingang und dem Ausgang angeordnete Stromeingangsschleifenleitung, an der das elektrische Steuer- und/oder Regelstellsignal insbesondere von 4 bis 20 mA von der Prozessleitstelle anliegt. Die Prüfelektronik wird in einer Stromleitung angeordnet, die im Prüfzustand zur Stromeingangsschleifenleitung parallel geschaltet ist. Vorzugsweise ist in der Stromeingangschleifenleitung ein Widerstand und eine Spannungsbegrenzungsdiode, wie eine Zenerdiode, vorgesehen. Die Spannungsbegrenzungsdiode dient dazu, die Spannung zu begrenzen und damit eine niedrige Bürde/Last zu ermöglichen.

Bei einer Weiterbildung der Erfindung ist ein Messgerät im Feldgerät vorgesehen, das das im Prüfzustand erzeugte Prüfsignal erfasst. Das Messgerät ist mit dem Mikroprozessor des Feldgeräts signalübertragungsgemäß gekoppelt, um die erfassten Prüfungssignale zu übertragen. Der Mikroprozessor speichert die erfassten Prüfsignal und/oder wertet sie gegebenenfalls für eine Diagnose der Funktionsweise des Feldgeräts aus. Der Mikroprozessor kann die erfassten Prüfsignale auch zur Weiterverarbeitung an die übergeordnete Prozessleitstelle weiterleiten. Vorzugsweise ist das Messgerät eine Strommessschaltung, die insbesondere parallel zur Prüfelektronik geschaltet ist und vorzugsweise einen Operationsverstärker aufweist. Es sei klar, dass die Strommessschaltung das von der Prüfelektronik erzeugte Prüfsignal nicht beeinflussen soll.

Bei einer Weiterbildung der Erfindung hat das Feldgerät einen Stellventil-Positionssensor, dessen Positionssignale im Mikroprozessor des Feldgeräts empfangen werden. Der Mikroprozessor kann ein Überwachungsprogramm aufweisen, das die Funktionsweise der elektrischen Sicherheitsschaltung dahingehend überwacht, ob und/oder ab welchem Prüfsignal die elektrische Sicherheitsschaltung anspricht. Die Beurteilung der korrekten Funktion der Sicherheitsschaltung kann aufgrund der Überwachung des Stellsignals, welches an den Antrieb gesendet wird, alternativ zu dem Vergleich mit bekannten Schwellwerten zum Ansteuern des I/P-Wandlers oder der Erfassung der Position des Stellgerätes erfolgen.

Bei der Erfindung hat das Feldgerät einen UND-Logikbaustein, der eingangsseitig sowohl mit einem Ausgang des Mikroprozessors als auch mit einem Ausgang der elektrischen Sicherheitsschaltung verbunden ist. Der UND-Logikbaustein ist dazu ausgelegt, nur dann ein elektrisches Sicherheitssignal zum Verfahren des Stellgeräts in die Sicherheitsstellung abzugeben, wenn die Stromstärke und/oder die Spannung am Ausgang des Mikroprozessors und/oder der Sicherheitsschaltung einen logikspezifischen Schwellenwert über- oder unterschreitet, insbesondere eine Stromstärke von etwa 0,0 mA vorliegt. Dies bedeutet, dass, sollte der UND-Logikbaustein ein Notsignal entweder von der Sicherheitsschaltung oder von dem Mikroprozessor empfangen, stellt der Logikbaustein in beiden Fällen den Strom/Hilfsenergie-Wandler derart, dass ein Hilfsenergiesicherheitssignal abgegeben wird. Der UND-Logikbaustein gewährleistet eine hohe Sicherheit der Funktionsweise des Feldgeräts, und damit eine einfache Zertifizierung.

Bei einer Weiterbildung der Erfindung sind wenigstens eine Elektronikkomponente, wie ein Mikroprozessor, ein Datenspeicher, ein Signalmessgerät, eine Sensorik, etc., des Feldgeräts ausschließlich über das empfangene elektrische Steuer- und/oder Regelstellsignal energetisch versorgt.

Bei einer Weiterbildung der Erfindung sind der Strom/Hilfsenergie-Wandler, die elektrische Sicherheitsschaltung und die Prüfelektronik, vorzugsweise auch der Mikroprozessor und die weiteren Elektronikkomponenten, in einem abgeschlossenen Stellungsreglergehäuse untergebracht.

Es sei klar, dass das erfindungsgemäße Feldgerät entsprechend der Verfahrensschritte des erfindungsgemäßen Prüfungsverfahrens arbeiten kann, wobei insbesondere das erfindungsgemäße Verfahren entsprechend der Funktionsweise des erfindungsgemäßen Feldgeräts verfahren kann.

Weitere Eigenschaften, Vorteile und Merkmale der Erfindung werden durch die vorliegende Beschreibung einer bevorzugten Ausführung anhand der beiliegenden Zeichnungen verdeutlicht, in denen zeigen:
- Figur 1: ein Blockdiagramm einer Schaltungselektronik des erfindungsgemäßen Feldgeräts; und
- Figur 2: ein Blockschaltbild einer weiteren Ausführung eines erfindungsgemäßen Feldgeräts.

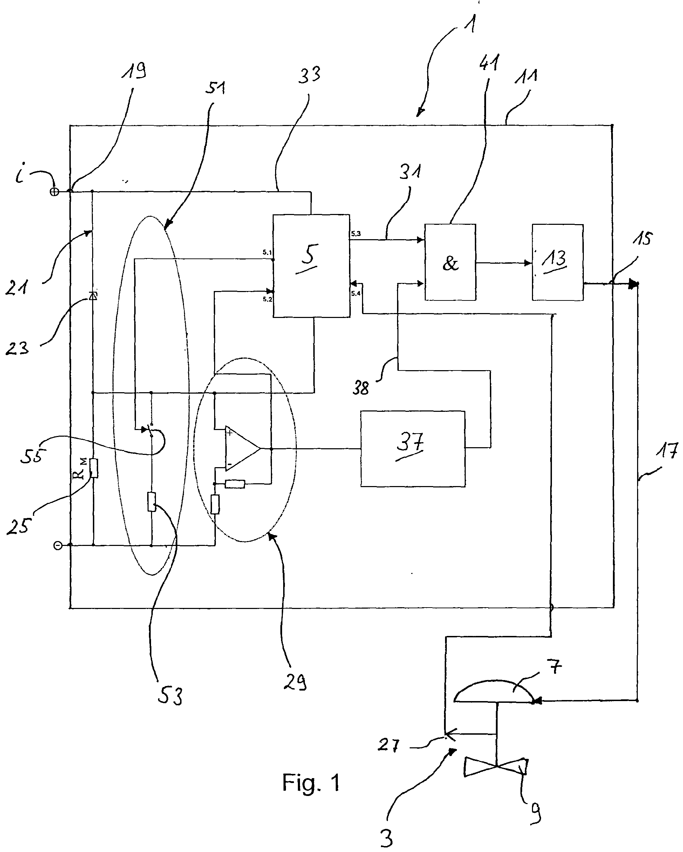

In Figur 1 ist das erfindungsgemäße prozesstechnische Feldgerät als Stellungsregler ausgeführt und im Allgemeinen mit der Bezugsziffer 1 versehen. Der Stellungsregler 1 dient dazu, ein pneumatisch betriebenes Stellgerät 3 zu betätigen, das einen pneumatischen Antrieb 7 und ein durch den pneumatischen Antrieb 7 stellbares Stellventil 9 umfasst, das eine Fluidströmung einer nicht dargestellten prozesstechnischen Anlage beeinflussen kann.

Der Stellungsregler 1 umfasst ein fluiddicht geschlossenes Stellungsreglergehäuse 11, in dem sämtliche Komponenten des erfindungsgemäßen Stellungsreglers 1 untergebracht sind.

Der Stellungsregler 1 hat als Hauptfunktionskomponente einen Mikroprozessor 5 und einen I/P-Wandler 13, der über einen Stellungsreglerausgang 15 mit dem pneumatischen Antrieb 7 über eine pneumatische Leitung 17 verbunden ist.

Der Stellungsregler 1 umfasst einen Eingang 19, über den der Stellungsregler 1 ein Steuer- und/oder Regelstellsignal i mit einem Stromstärkeniveau von 4 bis 20 mA empfängt. Je nach Abweichung der Regelgröße, d.h. der Position des Stellventils von dem Sollwert wird im Mikroprozessor ein Stellsignal erzeugt, das der Strom/Druck-Wandler in einen Druck umformt, wodurch entsprechend der pneumatische Antrieb 7 und damit das Stellventil 9 verfahren wird.

Sollte ein Notzustand der prozesstechnischen Anlage auftreten, kann die Übertragung des Steuer- und/oder Regelstellsignals i gestört sein, so dass der Stellungsreglereingang 19 stromlos gestellt wird, wodurch ebenfalls der Mikroprozessor 5 stromlos ist, so dass über den Mikroprozessorausgang 5.3 auch der Strom/Druck-Wandler stromlos ist, woraufhin der pneumatische Antrieb 7 entlüftet wird und die gespeicherte potentielle Energie von nicht dargestellten Druckfedern innerhalb des pneumatischen Antriebs 7 abgegeben wird und das Stellventil in eine vorbestimmte Notstellung verfahren wird.

Es ist besonders wichtig, die Funktionsweise dieser Notbetriebsprozedur mit einem hohen Wahrscheinlichkeitsgrad sicherzustellen.

Am Eingang 19 des Stellungsreglers 1 ist eine Stromeingangsschleifenleitung 21 vorgesehen, in welche das Steuer- und/oder Regelstellsignal i eingeleitet wird. In der Stromeingangsschleifenleitung 21 ist zur Spannungsbegrenzung wenigstens eine Zenerdiode 23 und ein dazu in Reihe angeordneter Messwiderstand 25, ein sogenannter Shunt, angeordnet. Alternativ zur Zenerdiode kann die Spannungsbegrenzung natürlich auch von einer elektronischen Spannungsbegrenzung realisiert sein. Aufgrund der durch den Messwiderstand 25 abfallenden Spannung misst ein Strommessgerät 29 den Strom auf der Stromschleife, der einen Sollwert für die Ventilposition repräsentiert. Der Sollwert wird über den Mikroprozessoreingang 5.2 dem Mikroprozessor 5 zugeführt und dort eingelesen. Der Mikroprozessor 5 erzeugt über eine Routine ein Ausgangssignal 31, das über den Mikroprozessorausgang 5.3 an den I/P-Wandler 13 abgegeben wird. Das Ausgangssignal 31 kann außerdem von anderen Regelungsbedingungen abhängen, die der Mikroprozessor 5 beispielsweise über ein digitales Protokoll, wie HART, über die Leitung 33 oder sonst wie empfängt. Die anderen Regelungsbedingungen können auch bereits vorab als Routine in dem Mikroprozessor 5 abgelegt sein.

Das Feldgerät 1 umfasst eine elektrische Sicherheitsschaltung 37, welche unterhalb eines Schwellenwertes des elektrischen Stroms (beispielsweise 4 mA) an der Eingangsschleifenleitung 21 ein elektrisches Sicherheitssignal an den I/P-Wandler 13 abgibt, welches veranlasst, dass der I/P-Wandler 13 den pneumatischen Antrieb 7 entlüftet. Vorzugsweise stellt die elektrische Sicherheitsschaltung 37 den I/P-Wandler 13 stromlos, falls der Eingangsschleifenleitungsstrom unter dem Schwellenwert liegen sollte. Die elektrische Sicherheitsschaltung 37 sorgt für ein sicheres Abschalten des Feldgeräts 1, wobei die restlichen Feldgerätkomponenten (außer dem I/P-Wandler 13), wie der Mikroprozessor 5, Kommunikationseinrichtungen und eventuelle Diagnosebausteine weiterhin energetisch versorgt bleiben.

Ein UND-Logikbaustein 41 ist eingangsseitig mit dem Mikroprozessorausgang 5.3 sowie mit dem Ausgang der elektrischen Sicherheitsschaltung 37 verbunden. Der Ausgang des UND-Logikbausteins 41 ist direkt mit dem I/P-Wandler 13 gekoppelt. Der UND-Logikbaustein lässt ein elektrisches Stellsignal 38 nur dann zu dem I/P-Wandler durch, wenn weder das Ausgangssignal 31 des Mikroprozessors 5 noch das elektrische Sicherheitssignal 38 der elektrischen Sicherheitsschaltung den I/P-Wandler 13 stromlos bzw. unterhalb eines Schwellwerts ansteuern würde. Der UND-Logikbaustein 41 kann aus zwei in Reihe angeordneten FETs bestehen.

Der Mikroprozessor 5 umfasst einen weiteren Eingang 5.4, über den Positionssignale 27 eines Positionssensors am Stellventil 9 hin zum Mikroprozessor für eine Regel- und/oder Diagnoseprozedur zurückgeführt wird.

Erfindungsgemäß umfasst der Stellungsregler 1 innerhalb dessen Gehäuse eine Prüfelektronik 51, die einen veränderlichen Widerstand 53 aufweist. Der Widerstand 53 kann als passives Bauteil oder aber aktiv durch Halbleiterelemente realisiert sein.

Ein erfindungsgemäßes Funktionsüberprüfungsverfahren kann über den Mikroprozessor 5 ausgelöst werden, indem der Mikroprozessor 5 über einen Ausgang 5.1 einen Ein/AusSchalter 55 der Prüfelektronik 51 ansteuert. Sobald der Mikroprozessor 5 den Schalter 55 schließt, wird ein Teil des ankommenden Stromes in der Eingangsschleifenleitung 21 über den Widerstand 53 fließen. Dies führt dazu, dass die elektrische Leistung über den Messwiderstand 25 abfällt, wodurch auch der der elektrischen Sicherheitsschaltung 37 zuzuführende Strom gesenkt wird. Der Umfang der Stromsenkung kann durch den veränderbaren Widerstand 53 eingestellt werden. Vorzugsweise wird der Ohm-Widerstand des Widerstands 53 über die Mikroprozessor 5 eingestellt. Sollte der Eingangsstrom an der elektrischen Sicherheitsschaltung 37 unter einem sicherheitsschaltungsspezifischen Schwellenwert sinken, veranlasst die elektrische Sicherheitsschaltung 37 die Stromlosstellung des I/P-Wandlers 13.

Dadurch wird der I/P-Wandler 13 in den Notzustand versetzt und entlüftet den pneumatischen Antrieb 7, was durch den Positionssensor dem Mikroprozessor 5 mitgeteilt wird. Der Mikroprozessor 5 überprüft in einer Ausführung, ob tatsächlich die Sicherheitsposition des Stellventils 9 erreicht wurde. Alternativ wird das Eingangssignal des I/P-Wandlers überwacht, wobei das Unterschreiten eines spezifischen Eingangswertes ein sicheres Abschalten bedeutet. Anschließend wird der Schalter 55 über den Ausgang 5.1 des Mikroprozessors geöffnet, wodurch die Testprozedur beendet ist.

Bei einer nicht dargestellten, verbesserten Ausführung der Prüfelektronik 51 ist der Widerstand 25 kontinuierlich veränderbar. Das heißt, der Eingangsstrom an der elektrischen Sicherheitsschaltung 37 wird kontinuierlichen gesenkt, um festzustellen, ab welcher Stromstärke die elektrische Sicherheitsschaltung 37 tatsächlich das Sicherheitssignal 38 an den I/P-Wandler 13 abgibt. Sollte hier eine zu starke Abweichung bezüglich des sicherheitsschaltungsspezifischen Schwellenwerts vorliegen, kann der erfindungsgemäße Stellungsregler 1 ein Warnsignal ausgeben.

Es sei klar, dass der erfindungsgemäße Stellungsregler 1 eine Diagnoseinformation direkt an dem Stellungsregler 1 visualisieren kann, beispielsweise auf einer LCD-Anzeige. Alternativ oder zusätzlich kann die Diagnoseinformation über digitale Kommunikation (HART, ZigBee, Blue Tooth) an das übergeordnete Prozessleitsystem übertragen werden.

Eine Diagnoseprozedur kann durch den Mikroprozessor 5 durchgeführt werden, der gespeicherte Kenndaten mit dem durch das Messgerät 29 und dem Positionssensor erfassten Daten vergleichen kann. Es sei klar, dass der Widerstand 53 der Prüfelektronik 51 auch in einer rückwärtigen Richtung verändert werden kann, so dass sich das Stellventil 9 wieder aus der Sicherheitsstellung heraus bewegt und genauso wie beim Abschalten werden die Kenndaten in den gespeicherten Kennwerten des Mikroprozessors 5 verglichen, um eine korrekte Funktion insbesondere der elektrischen Sicherheitsschaltung 37 zu überprüfen.

Auf diese Weise kann eine sicherheitsspezifische Sicherheitsstellung des Stellungsreglers 1 auf einfache Weise durchgeführt werden, weil zum einen die Sicherheitsstellung mit einer stellungsreglerinternen Prüfelektronik 51 überwacht werden kann und zum anderen die sicherheitsrelevanten Komponenten einfache Elektronikkomponenten bilden.

Bei einer nicht dargestellten Ausführung kann die Prüfelektronik 51 mittels Halbleiterelementen, wie einem Feldeffekttransistor (FET) gebildet werden. Alternativ kann eine Reihenschaltung aus einem passiven Widerstand und einer Diode vorgesehen sein. Der Widerstand dient der Strombegrenzung, während die Diode auf schaltungstechnisch einfache Weise Fehlerströme vermeidet und sicherstellt, dass bei einer Fehlfunktion der Prüfelektronik 51 nur ein solcher Fehler entstehen kann, dass die Sicherheitsschaltung 37 ausgelöst wird und der I/P-Wandler 13 stromlos gestellt wird.

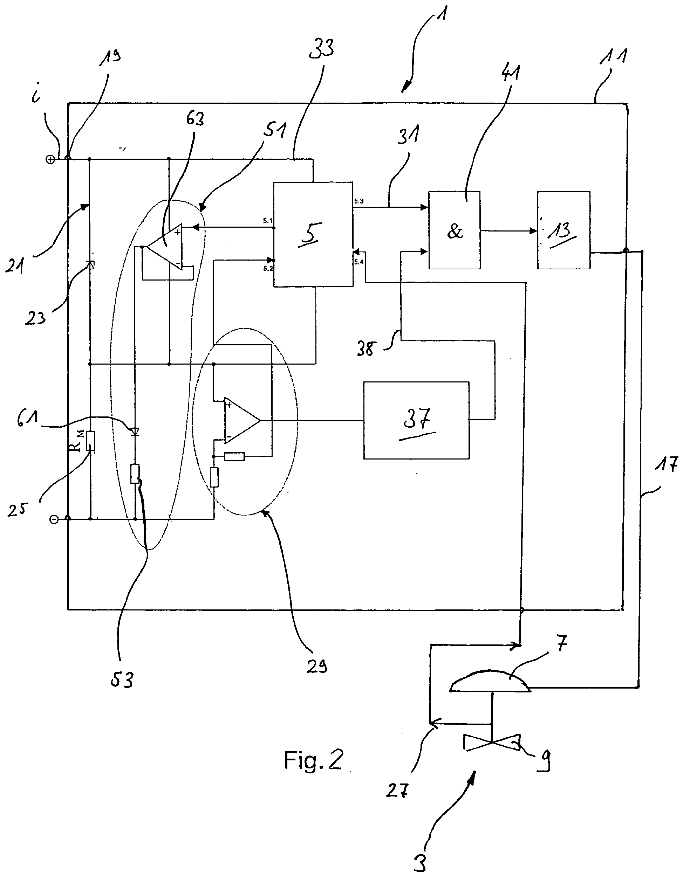

Eine alternative Ausführung des Feldgeräts ist in Figur 2 dargestellt. Zur besseren Lesbarkeit der Figurenbeschreibung werden für identische oder ähnliche Bauteile die gleichen Bezugsziffern verwendet. Die Ausführung gemäß Figur 2 unterscheidet sich von der gemäß Figur 1 dadurch, dass vor dem Strombegrenzungswiderstand 53 anstatt des Schalters 55 eine Diode 61 in Reihe geschaltet ist, wodurch der Strom zum Auslösen und Abschalten variiert wird. Der Ausgang 5.1 des Mikroprozessors 5 steuert nicht direkt den Strom, sondern einen Operationsverstärker 63, welcher den Strom der Prüfelektronik 51 verändert. Entsprechend der Ausführung gemäß Figur 1 stellt diese Prüfelektronik 51 gemäß Figur 2 eine steuer- und/oder regelbare Stromsenke dar, die ein gezieltes Abschalten und Einschalten des I/P-Wandlers 13 erreicht.

Bei einem bevorzugten Funktionsüberprüfungsverfahren dahingehend, ob das Stellventil 9 eine korrekte Sicherheitsstellung eingenommen hat, wird als erster Schritt ein definierter Sollwert (4 mA) bei einem Zweileitergerät an dem Stellungsregler 1 angelegt. Damit kann die Kalibrierung von gespeicherten Kenndaten in einem ersten Schritt überprüft werden, wodurch die Genauigkeit der Funktionsüberprüfung erheblich verbessert werden kann. Anschließend wird eine Prüfung auf Funktion der elektrischen Sicherheitsschaltung 37 mit Hilfe der Prüfelektronik 51 vorgenommen.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen im Rahmen der Patentansprüche von Bedeutung sein.

### Bezugszeichenliste

- 1: Stellungsregler
- 3: Stellgerät
- 5: Mikroprozessor
- 5.1: Ausgang
- 5.3: Mikroprozessorausgang
- 5.4: Eingang
- 7: pneumatischer Antrieb
- 9: Stellventil
- 11: Stellungsreglergehäuse
- 13: I/P-Wandler
- 15: Stellungsreglerausgang
- 17: pneumatische Leitung
- 19: Eingang
- 21: Stromeingangschleifenleitung
- 23: Zenerdiode
- 25: Messwiderstand
- 29: Strommessgerät
- 31: Ausgangssignal
- 33: Leitung
- 37: elektrische Sicherheitsschaltung
- 38: elektrisches Stellsignal
- 41: UND-Logikbaustein
- 51: Prüfelektronik
- 53: Widerstand
- 55: Schalter
- 61: Diode
- 63: Operationsverstärker
- i: Steuer- und/oder Regelstellsignal

## Patentansprüche

1. Verfahren zum Überprüfen der Funktionsweise eines prozesstechnischen Feldgeräts, insbesondere Stellungsreglers (1), zum Ansteuern eines mit Hilfe einer Hilfsenergie, wie Pneumatik, betriebenen Stellgeräts (3) einer prozesstechnischen Anlage, welches Feldgerät umfasst:
- einen Strom/Hilfsenergie-Wandler, wie einen I/P-Wandler (13), der ein vorbestimmtes Hilfsenergiesicherheitssignal abgeben kann, um das Stellgerät (3) in eine vorbestimmte Sicherheitsstellung zu bringen;
- eine dem Strom/Hilfsenergie-Wandler vorgeschaltete, elektrische Sicherheitsschaltung (37), die abhängig von einem am Feldgerät eingehenden elektrischen Steuer- und/oder Regelstellsignal (i) von einem passiven Schaltzustand in einen aktiven Schaltzustand gebracht werden kann, in dem die elektrische Sicherheitsschaltung (37) den Strom/Hilfsenergie-Wandler veranlasst, das Hilfsenergiesicherheitssignal abzugeben;
wobei die Sicherheitsschaltung (37) dann selbsttätig in den aktiven Schaltzustand gelangt, wenn das elektrische Steuer- und/oder Regelstellsignal (i) einen für die Sicherheitsschaltung (37) spezifischen Stromstärken- und/oder Spannungs-Schwellenwert unter- oder überschreitet, wobei eine Eingangsstromstärke und/oder -spannung des elektrischen Steuer- und/oder Regelstellsignals (i) feldgerätindividuell derart geändert wird, dass ein sicherheitsschaltungsindividuelles elektrisches Prüfsignal erzeugt wird, und das Prüfsignal an die Sicherheitsschaltung (37) abgegeben wird, um diese auf Funktion zu überprüfen; und wobei ein UND-Logikbaustein (41) vorgesehen wird, der eingangsseitig sowohl mit einem Ausgang (5.3) eines Mikroprozessors (5) als auch mit einem Ausgang der elektrischen Sicherheitsschaltung (37) verbunden ist und durch den ein elektrisches Sicherheitssignal zum Verfahren des Stellgeräts (3) in die Sicherheitsstellung an den Strom/Hilfsenergie-Wandler nur dann abgegeben wird, wenn von einer Stromstärke oder einer Spannung an einem Ausgang eines Mikroprozessors (5) und/oder der Sicherheitsschaltung (37) ein logikbausteinspezifischer Schwellenwert über- oder unterschritten wird, so dass das Hilfsenergiesicherheitssignal von dem Strom/Hilfsenergie-Wandler abgegeben wird.

2. Verfahren nach Anspruch 1, **dadurch gekennzeichnet, dass** das am Feldgerät eingehende elektrische Steuer- und/oder Regelstellsignal (i) sowohl an der elektrischen Sicherheitsschaltung (37) als auch an wenigstens eine weitere Elektronikkomponente des Feldgeräts, insbesondere dem Mikroprozessor (5), angelegt wird, wobei zur Funktionsüberprüfung nur das elektrische Steuer- und/oder Regelstellsignal (i) für die elektrische Sicherheitsschaltung (37) geändert wird, ohne das elektrische Steuer- und/oder Regelstellsignal (i) für die wenigstens eine weitere Elektronikkomponente zu verändern.

3. Verfahren nach einem der vorstehenden Ansprüche, **dadurch gekennzeichnet, dass** ein steuerbarer Umfang der Änderung der Eingangsstromstärke und/oder - spannung des Prüfsignals, insbesondere manuell oder von dem Mikroprozessor (5) vordefiniert, eingestellt wird und/oder dass es feldgerätindividuell manuell und/oder durch eine Prozessleitstelle initiiert wird, wobei der zeitliche Ablauf des Verfahrens von dem Mikroprozessor (5) des Feldgeräts gesteuert wird.

4. Verfahren nach einem der vorstehenden Ansprüche, **dadurch gekennzeichnet, dass** ein Wert der an der elektrischen Sicherheitsschaltung anliegenden, geänderten Eingangsstromstärke und/oder -spannung gemessen wird und insbesondere an den Mikroprozessor (5) des Feldgeräts weitergeleitet wird, wobei insbesondere festgestellt wird, ob und/oder ab welchem Wert der an der elektrischen Sicherheitsschaltung (37) anliegenden Eingangsstromstärke und/oder -spannung das Feldgerät in die Sicherheitsstellung verfahren wird, insbesondere das Hilfsenergiesicherheitssignal abgegeben wird, und der festgestellte Wert mit den sicherheitsschaltungsspezifischen Stromstärken- und/oder Spannungs-Schwellenwert verglichen wird.

5. Verfahren nach einem der vorstehenden Ansprüche, **dadurch gekennzeichnet, dass** die Ansprechschwelle der an der elektrischen Sicherheitsschaltung (37) anliegenden Eingangsstromstärke und/oder -spannung durch Sensieren des vorbestimmten Hilfsenergiesicherheitssignals am Ausgang des Strom/Hilfsenergie-Wandlers und/oder einer Sicherheitsposition des Stellgeräts (3) unveränderbar festgelegt wird.

6. Verfahren nach einem der vorstehenden Ansprüche, **dadurch gekennzeichnet, dass** ein Warnsignal ausgegeben wird, wenn der gemessene Wert der an der elektrischen Sicherheitsschaltung (37) anliegende Eingangsstromstärke und/oder -spannung außerhalb eines vorbestimmten Toleranzbereichs liegt und/oder einen vorbestimmten Mindestwert für die elektrische Sicherheitsschaltung unter- oder überschreitet, ohne das das Stellgerät (3) in die Sicherheitsstellung verfahren ist, insbesondere das Hilfsenergiesicherheitssignal abgegeben ist und/oder dass der sicherheitsschaltungsspezifische Stromstärken-Schwellenwert bei etwa 4 mA liegt und bei Initiierung des Verfahrens das am Feldgerät eingegangene elektrische Steuer- und/oder Regelstellsignal (i) von größer 4 mA vor dem Empfang an der elektrischen Sicherheitsschaltung (37) auf einen Stromstärkewert im Bereich von etwa 4 mA oder darunter insbesondere kontinuierlich verringert wird.

7. Verfahren nach einem der vorstehenden Ansprüche, **dadurch gekennzeichnet, dass** die elektrische Sicherheitsschaltung (37) in dessen aktiven Schaltzustand einem Strom/Druck-Wandler ein vorbestimmtes Live-Zero-Signal insbesondere mit einer Stromstärke zwischen 0,0 und etwa 4 mA mitteilt, der auf das Live-Zero-Signal hin einen pneumatischen Antrieb (7) des Stellgeräts (3) entlüftet, woraufhin das Stellgerät (3) insbesondere durch Freigabe potentieller Federenergie in die Sicherheitsstellung (37) gezwungen wird.

8. Prozesstechnisches Feldgerät, insbesondere Stellungsregler (1) oder I/P-Umformer, zum Ansteuern eines durch eine Hilfsenergie, wie Pneumatik, betriebenen Stellgeräts (3), das bei Empfang eines Hilfsenergiesicherheitssignals, wie eines Entlüftungssignals, in eine vorbestimmte Sicherheitsstellung verfährt, umfassend:
- einen Eingang (19) zum Empfangen eines elektrischen Steuer- und/oder Regelstellsignals (i), wie eines Live-Zero-Signals,
- einen Ausgang (15) zum Abgeben des Hilfsenergieausgangssignals zum Steuern des Stellgeräts (3),
- einen Strom/Hilfsenergie-Wandler, wie einen I/P-Wandler (13), der das von dem elektrischen Steuer- und/oder Regelstellsignal (i) abhängende Hilfsenergieausgangssignal erzeugt, **gekennzeichnet durch**
- eine zwischen dem Eingang (19) und dem Strom/Hilfsenergie-Wandler angeordnete, elektrische Sicherheitsschaltung (37), die abhängig von dem am Feldgerät empfangenen
elektrischen Steuer- und/oder Regelstellsignal (i) von einem passiven Schaltzustand in einen aktiven Schaltzustand gebracht werden kann, in dem die elektrische Sicherheitsschaltung (37) den Strom/Hilfsenergie-Wandler veranlasst, das Hilfsenergiesicherheitssignal abzugeben, ferner **dadurch gekennzeichnet, dass** die Sicherheitsschaltung (37) dann selbsttätig in den aktiven Schaltzustand gebracht wird, wenn das elektrische Steuer- und/oder Regelstellsignal (i) einen für die Sicherheitsschaltung (37) spezifischen Stromstärken- und/oder Spannungs-Schwellenwert unter- oder überschreitet, wobei das Feldgerät eine feldgerätindividuelle, dem Eingang (19) nachgeschaltete und der elektrischen Sicherheitsschaltung (37) vorgeschaltete, ansteuerbare Elektronik (51) zur Prüfung der Funktionsweise des Feldgeräts aufweist und dass die Prüfelektronik (51) von einem passiven Ruhezustand in einen aktiven Prüfzustand schaltbar ist, in dem die Prüfelektronik (51) das am Feldgerät empfangene und der elektrischen Sicherheitsschaltung (37) zuzuführende, elektrische Steuer- und/oder Regelstellsignal (i) zur Bildung eines elektrischen Prüfsignals festgelegter und/oder festlegbarer Stromstärke und/oder Spannung ändert, das der elektrischen Sicherheitsschaltung (37) zugeführt wird, **gekennzeichnet durch** einen UND-Logikbaustein (41), der eingangsseitig sowohl mit einem Ausgang (5.3) eines Mikroprozessors (5) als auch mit einem Ausgang der elektrischen Sicherheitsschaltung (37) verbunden ist und dazu ausgelegt ist, nur dann ein elektrisches Sicherheitssignal zum Verfahren des Stellgeräts (3) in die Sicherheitsstellung an den Strom/Hilfsenergie-Wandler abzugeben, wenn die Stromstärke und/oder die Spannung am Ausgang des Mikroprozessors (5) und/oder der Sicherheitsschaltung (37) einen logikbausteinspezifischen Schwellenwert über- oder unterschreitet, so dass das Hilfsenergiesicherheitssignal vom dem Strom/Hilfsenergie-Wandler abgegeben wird.

9. Feldgerät nach Anspruch 8, **dadurch gekennzeichnet, dass** der Mikroprozessor (5) über dessen Eingang (5.1) derart mit dem Feldgeräteingang signalübertragungsgemäß verbunden ist, dass das elektrische Steuer- und/oder Regelstellsignal (i) auch bei in den Prüfzustand geschalteter Prüfelektronik (51) zur elektrischen Energieversorgung des Mikroprozessors (5) im Wesentlichen unverändert bleibt.

10. Feldgerät nach Anspruch 8 oder 9, **dadurch gekennzeichnet, dass** die Prüfelektronik (51) für deren Umschaltung in den Prüfzustand und/oder in den passiven Ruhezustand von dem Mikroprozessor (5) des Feldgeräts angesteuert ist und/oder dass die Prüfelektronik (51) für deren Umschaltung in den Prüfzustand und/oder in den passiven Ruhezustand manuell durch eine Bedienperson insbesondere von der Außenseite eines Gehäuses des Feldgeräts vorzugsweise durch manuelle Betätigung eines außenseitigen Bedienelements, wie eines Knopfes, ansteuerbar ist und/oder dass die Prüfelektronik (51) in deren Prüfzustand die an der elektrischen Sicherheitsschaltung (37) anliegende Stromstärke einstellbar senkt.

11. Feldgerät nach einem der Ansprüche 8 bis 10, **dadurch gekennzeichnet, dass** die Prüfelektronik (51) einen insbesondere kontinuierlich veränderbaren Widerstand, insbesondere einen Strombegrenzungswiderstand, und/oder ein Halbleiterelement, insbesondere ein Feldeffekttransistor, aufweist, wobei insbesondere die Prüfelektronik (51) einen mit dem Widerstand und/oder dem Halbleiterelement in Reihe angeordneten Schalter aufweist.

12. Feldgerät nach einem der Ansprüche 8 bis 11, **dadurch gekennzeichnet, dass** das Feldgerät eine zwischen dem Eingang (19) und dem Ausgang (15) angeordnete Stromeingangsschleifenleitung (21) aufweist, an der das elektrische Steuer- und/oder Regelstellsignal (i) insbesondere von 4 bis 20mA anliegt, wobei die Prüfelektronik (51) in einer Stromleitung angeordnet ist, die im Prüfzustand zur Stromeingangsschleifenleitung (21) parallel geschaltet ist, wobei insbesondere in der Stromeingangsschleifenleitung (21) ein Widerstand und eine Spannungsbegrenzungsdiode, wie eine Zenerdiode (23), angeordnet ist.

13. Feldgerät nach einem der Ansprüche 8 bis 12, **dadurch gekennzeichnet, dass** ein Messgerät (29) das Prüfsignal erfasst und mit dem Mikroprozessor (5) des Feldgeräts zum Übertragen, insbesondere zum Speichern und/oder Auswerten, des erfassten Prüfsignals verbunden ist, wobei insbesondere das Messgerät (29) eine Strommessschaltung ist, die insbesondere parallel zur Prüfelektronik (51) geschaltet ist und vorzugsweise einen Operationsverstärker aufweist.

14. Feldgerät nach einem der Ansprüche 8 bis 13, **dadurch gekennzeichnet, dass** es einen Positionssensor aufweist, dessen Positionssignal der Mikroprozessor (5) des Feldgeräts empfängt, der insbesondere die elektrische Sicherheitsschaltung (37) dahingehend überwacht, ob und/oder ab welchem Prüfsignal die elektrische Sicherheitsschaltung (37) anspricht.

15. Feldgerät nach einem der Ansprüche 8 bis 14, **dadurch gekennzeichnet, dass** der UND-Logikbaustein (41) dazu ausgelegt ist, nur dann ein elektrisches Sicherheitssignal zum Verfahren des Stellgeräts (3) in die Sicherheitsposition an den Strom/Hilfsenergie-Wandler abzugeben, wenn am Ausgang des Mikroprozessors (5) und/oder des Schalters eine Stromstärke von etwa 0,0 mA vorliegt.

16. Feldgerät nach einem der Ansprüche 8 bis 15, **dadurch gekennzeichnet, dass** wenigstens eine Elektronikkomponente, wie der Mikroprozessor (5), ein Datenspeicher, ein Signalmessgerät, eine Sensorik, etc., des Feldgeräts ausschließlich über das elektrische Steuer- und/oder Regelstellsignal (i) energetisch versorgt sind und/oder dass der Strom/Hilfsenergie-Wandler, die elektrische Sicherheitsschaltung (37) und die Prüfelektronik (51), vorzugsweise auch der Mikroprozessor (5), in einem abgeschlossenen Stellungsreglergehäuse (11) untergebracht sind.

## Claims

1. Method for testing the functionality of a field device for an industrial process, especially of a positioner (1), for sending a control signal to a final controlling device (3) of an industrial processing plant, the final controlling device (3) being operated by means of a secondary power such as pneumatic power, the field device comprising:
- a current/secondary power converter such as an I/P converter (13) for generating a predetermined secondary power safety control signal in order to bring the final controlling device (3) into a predetermined safe position;
- an electronic safety circuit (37) preposed to the current/secondary power converter, which, depending on an electrical control signal (i) received by the field device, can be switched from a passive state into an active state in which the electronic safety circuit (37) causes the current/secondary power converter to issue the secondary power safety control signal;
wherein the safety circuit will automatically adopt the active state if the electrical control signal falls below or exceeds a current and/or voltage threshold value specific to the safety circuit,
wherein an input current and/or input voltage of the electrical control signal is modified in a manner specific to the field device in such a way that an electrical test signal specific to the safety circuit is generated and the test signal is transmitted to the safety circuit (37) in order to test its functionality;
and wherein an AND logic component (41) is provided, which is connected on the input side with an output (5.3) of a microprocessor (5) and with an output of the electrical safety circuit (37), and through which an electrical safety control signal for moving the final controlling device (3) towards the safe position at the current/secondary power converter is provided only if a current or a voltage at an output of the microprocessor (5) and/or of the safety circuit (37) exceeds or falls below a threshold value specific to a logic component such that the secondary power safety control signal is provided from the current/secondary power converter.

2. Method according to claim 1, **characterised in that** the electrical control signal received (i) by the field device is transmitted to the electrical safety circuit (37) as well as to at least one further electronic component of the field device, such as the microprocessor (5), wherein only the electrical control signal (i) for the electrical safety circuit (37) is modified for functionality testing without modifying the electrical control signal for the at least one further electronic component.

3. Method according to one of the preceding claims, **characterised in that** a controllable range of change of the input current and/or input voltage of the test signal, predefined especially manually or by the microprocessor (5), is adjusted, and/or that it is initiated in a way specific to the field device manually and/or via a basic process control unit, wherein the time order of the method is controlled by a microprocessor (5) of the field device.

4. Method according to one of the preceding claims, **characterised in that** a value of the modified input current and/or input voltage of the test signal is measured at the safety circuit and transferred in particular to the microprocessor (5) of the field device, wherein it is particularly determined whether and/or from which value onwards of the input current and/or input voltage at the electrical safety circuit (37) the final controlling device (3) will move into the safe position, especially when the secondary power safety control signal is generated, and the determined value is compared to the current and/or voltage threshold value specific to the safety circuit.

5. Method according to one of the preceding claims, **characterised in that** the response threshold of the input current and/or input voltage present at the electrical safety circuit (37) is unchangeably determined by sensing the predetermined secondary power safety control signal at the output of the current/secondary power converters and/or the safe position of the final controlling device (3).

6. Method according to one of the preceding claims, **characterised in that** a warning signal is generated when the measured value of the input current and/or input voltage at the electrical safety circuit (37) is outside a predetermined tolerance field and/or falls below or exceeds a predetermined threshold value for the electrical safety circuit (37) without the final controlling device (3) having moved into the safe position, in particular the secondary power safety control signal having been generated, and/or the current threshold value specific to the safety circuit is approximately 4 mA, and upon initiation of the method, the electrical control signal (i) present at the field device input larger than 4 mA is in particular continuously lowered prior to its reception by the electrical safety circuit (37) to a value of about 4 mA or less.

7. Method according to one of the preceding claims, **characterised in that** the electrical safety circuit (37) transmits in its active state a predetermined "Live-Zero"-signal of about particularly 0.0 to about 4 mA to an I/P converter which upon receiving the Live-Zero-signal vents the pneumatic actuator (7) of the final controlling device (3) whereupon particularly the final controlling device (3) is forced into the safe position through release of potential spring energy.

8. Field device for an industrial process, especially a positioner (1) or I/P converter (13), for sending a control signal to a final controlling device (3) driven by a secondary power such as pneumatic energy, which, upon reception of a secondary power signal, such as a venting signal, moves into a predetermined safe position, comprising:
- an input (19) for receiving an electrical control signal (i) such as a live-zero-signal,
- an output (15) for transmitting the secondary power output signal for controlling the final controlling device (3),
- a current/secondary power converter, such as an I/P converter (13), generating the secondary power signal, which depends on an electrical control signal (i), **characterized in that**
- an electrical safety circuit (37) disposed between the input (19) and the current/secondary power converter, which circuit, depending on the electrical control signal (i) received by the field device can be shifted from a passive state into an active state as the safety circuit causes the current/secondary power converter to generate the secondary power safety control signal, further **characterized in that** the safety circuit (37) is automatically switched to the active state when the electrical control signal (i) falls below or exceeds a current or voltage threshold value specific to the safety circuit (37),
wherein the field device has downstream the input and upstream the electrical safety circuit (37) a controllable electrical circuit specific (51) to the field device for testing the functionality of the field device, and that the electronic test circuit (51) is switchable from a passive rest state to an active test state in which the electronic test circuit (51) modifies the electrical control signal (i) received at the field device for being passed on to the electronic safety circuit (37), in order to generate an electrical test signal of predetermined and/or pre-determinable current and/or voltage, which is transmitted to the electrical safety circuit (37), **characterized by** an AND logic component (41), which is connected on the input side with an output (5.3) of a microprocessor (5) and with an output of the electrical safety circuit (37), and designed to provide an electrical safety control signal for moving the final controlling device (3) towards the safe position at the current/secondary power converter only if the current or the voltage at the output of the microprocessor (5) and/or of the safety circuit (37) exceeds or falls below a threshold value specific to a logic component such that the secondary power safety control signal is provided from the current/secondary power converter.

9. Field device according to claim 8, **characterised in that** the microprocessor (5) is electronically coupled thought its output (5.3) with the input of the filed device in such a way that the electrical control signal (i) remains essentially unchanged with respect to supplying power to the microprocessor (5) even while the electronic test circuit (51) is switched into the test state.

10. Field device according to one of the claims 8 or 9, **characterised in that**, the electronic test circuit (51) receives a control signal by the microprocessor (5) of the field device for its switching into the test state and/or into the rest state, and/or that the electronic test circuit (51) can be switched manually by an operating person into the test state and/or into the passive rest state, especially from the outside of a housing of the field device, preferably by manually actuating an external operating element, such as a knob, and/or that the electronic test circuit (51) in its test state adjustably lowers the current transmitted to the electrical safety circuit (37).

11. Field device according to one of the claims 8 to 10, **characterised in that** the electronic test circuit (51) features an especially continuously variable resistance, especially a current limiting resistance and/or a semi-conductor element, especially a field effect transistor, wherein particularly the electronic test circuit (51) has a switch connected in line with the resistance and/or the semi-conductor element.

12. Field device according to one of the claims 8 to 11, **characterised in that** the field device has a current input loop line (21) disposed between the input (19) and the output (15), to which the electrical control signal (i), especially from 4 to 20 mA is fed, wherein the electronic test circuit (51) is disposed in an electric line, which in the test state is switched in parallel to the current input loop line (21), wherein particularly within the current input loop line (21) a resistance and a voltage limiting diode such as a Zener diode are disposed.

13. Field device according to one of the claims 8 to 12, **characterised in that** a measurement instrument (29) captures the test signal and is electronically connected to the microprocessor (5) of the field device for transmission, especially for storage and/or evaluation of the captured test signal, wherein particularly the measurement instrument (29) is preferably a current measurement circuit which in particular is switched in parallel to the electronic test circuit (51) and preferably features an operational amplifier.

14. Field device according to one of the claims 8 to 13, **characterised in that** the field device has a position sensor, the position signals of which are received by the field device's microprocessor (5), which monitors in particular the electrical safety circuit (37) with respect to whether and/or from which test signal onwards the electrical safety circuit (37) responds.

15. Field device according to one of the claims 8 to 14, **characterised in that** the AND logic component (41) is designed to output an electric safety control signal to the current/second power converter for moving the final controlling device (3) towards the safe position only if at the output of the microprocessor (5) and/or of the switch a current value of about 0.0 mA is present.

16. Field device according to one of the claims 8 to 15, **characterised in that** at least one electronic component, such as the microprocessor (5), a data storage device, a signal measurement device, a sensing device, etc. of the field device is powered exclusively via the electrical control signal (i), and/or that the current/secondary power converter, the electrical safety circuit (37), and the electronic test circuit (51), preferably also the microprocessor (5) are disposed in an enclosed positioner housing (11).

## Revendications

1. Procédé pour contrôler le fonctionnement, d'un appareil de terrain automatisé, notamment un régulateur de position (1), pour commander un organe de réglage (3) d'une installation automatisée, fonctionnant à l'aide d'une énergie auxiliaire, comme une énergie pneumatique, lequel apparaît de terrain comprend :
- un convertisseur d'électricité/d'énergie auxiliaire, tel qu'un convertisseur I/P (13), qui peut émettre un signal de sécurité d'énergie auxiliaire prédéterminé, afin d'amener l'organe de réglage (3) dans une position de sécurité prédéterminée ;
- un circuit de sécurité électrique (37), branché en amont du convertisseur d'électricité/énergie auxiliaire, qui peut être amené en fonction d'un signal de réglage et/ou de commande électrique entrant dans l'appareil de terrain (i) d'un état de commutation passive à un état de commutation active, dans lequel le circuit de sécurité électrique (37) donne instruction au convertisseur d'électricité/énergie auxiliaire d'émettre le signal de sécurité d'énergie auxiliaire ;
dans lequel le circuit de sécurité (37) passe ensuite automatiquement dans l'état de commutation actif lorsque le signal de régulation et/ou de commande électrique (i) sous dépasse ou dépasse une valeur de seuil de tension et/ou d'intensité de courant spécifique pour le circuit de sécurité (37), dans lequel une intensité de courant d'entrée et/ou une tension de courant d'entrée du signal de régulation et/ou de courant électrique (i) est modifiée individuellement sur l'appareil de terrain de telle sorte qu'un signal de contrôle électrique individuel de circuit de sécurité soit généré et le signal de contrôle est émis sur le circuit de sécurité (37), afin de contrôler le fonctionnement de ce dernier ;
et dans lequel un module logique ET (41) est prévu, qui est relié tant du côté d'entré avec une sortie (5.3) d'un microprocesseur (5) qu'avec une sortie du circuit de sécurité électrique (37) et par l'intermédiaire duquel un signal de sécurité électrique pour déplacer l'organe de réglage (3) dans la position de sécurité est à présent émis sur le convertisseur d'électricité/énergie auxiliaire, lorsqu'une valeur seuil spécifique au module logique est sous dépassée ou dépassée par une intensité de courant ou une tension sur une sortie d'un microprocesseur (5) et/ou du circuit de sécurité (37), de sorte que le signal de sécurité d'énergie auxiliaire soit émis par le convertisseur d'électricité/énergie auxiliaire.

2. Procédé selon la revendication 1, **caractérisé en ce que** le signal de régulation et/ou de commande électrique (i) entrant dans l'appareil de terrain est appliqué tant sur le circuit de sécurité électrique (37) que sur au moins un autre composant électronique de l'appareil de terrain, notamment le microprocesseur (5), dans lequel afin de contrôler le fonctionnement seul le signal de régulation et/ou de commande électrique (i) est modifié pour le circuit de sécurité électrique (37), sans modifier le signal de régulation et/ou de commande électrique (i) pour au moins un autre composant électronique.

3. Procédé selon une des revendications précédentes, **caractérisé en ce que** une amplitude pouvant être commandée de la modification de l'intensité de courant d'entrée et/de la tension du signal de contrôle est réglée notamment manuellement de manière prédéfinie par le microprocesseur (5) et/ou **en ce que** elle est amorcée de manière individuelle sur l'appareil de terrain manuellement et/ou par l'intermédiaire d'une interface de processus, dans lequel le déroulement temporel du procédé est commandé par le microprocesseur (5) de l'appareil de terrain.

4. Procédé selon une des revendications précédentes, **caractérisé en ce que** une valeur de l'intensité de courant l'entrée et/ou de tension modifiée, présente sur le circuit de sécurité électrique est mesurée et notamment est transmise au microprocesseur (5) de l'appareil de terrain, dans lequel il est notamment constaté si et/ou à partir de quelle valeur de l'intensité de courant d'entrée et/ou de tension présente sur le circuit de sécurité électrique (37) l'appareil de terrain est déplacé dans la position de sécurité notamment le signal de sécurité d'énergie auxiliaire est émis et la valeur constatée est comparée avec la valeur seuil de tension et/ou d'intensité de courant spécifique au circuit de sécurité.

5. Procédé selon une des revendications précédentes, **caractérise en ce que** le seuil d'amorce de l'intensité de courant d'entrée et/ou la tension présente sur le circuit de sécurité électrique (37) est déterminée de manière non modifiable en détectant le signal de sécurité d'énergie auxiliaire prédéterminé sur la sortie du convertisseur d'électricité/d'énergie électrique et/ou d'une position de sécurité de l'organe de réglage (3).

6. Procédé selon une des revendications précédentes, **caractérisé en ce que** un signal d'alerte est émis, lorsque la valeur mesurée de l'intensité de courant d'entrée et/ou la tension présente sur le circuit de sécurité électrique (37) se situe en dehors d'une plage de tolérance prédéterminée et/ou une valeur minimale prédéterminée pour le circuit de sécurité électrique est sous dépassée ou dépassée, sans que l'organe de réglage (3) soit déplacé dans la position de sécurité, notamment le signal de sécurité d'énergie auxiliaire est émis et/ou **en ce que** la valeur seuil d'intensité de courant spécifique au circuit de sécurité s'élève à environ 4 mA, et lors du démarrage du processus le signal de régulation et/ou de commande électrique entré sur l'appareil de terrain (i) est diminué notamment en continu de plus de 4 mA avant la réception sur le circuit de sécurité électrique (37) à une valeur d'intensité de tension dans la plage d'environ 4 mA ou inférieur.

7. Procédé selon une des revendications précédentes, **caractérisé en ce que** le circuit de sécurité électrique (37) dans son état de commutation active communique à un convertisseur d'électricité/pression un signal live zéro prédéterminé notamment avec une intensité de courant comprise entre 0,0 et environ 4 mA, qui purge l'air d'un d'entraînement pneumatique (7) de l'organe de réglage (3) sur le signal live zéro, après quoi l'organe de réglage (3) est contraint dans la position de sécurité (37) notamment en débloquant une énergie de ressort potentielle.

8. Appareil de terrain automatisé, notamment régulateur de position (1) ou convertisseur I/P pour commander un organe de réglage (3) fonctionnant au moyen d'une énergie auxiliaire, comme une énergie pneumatique, qui lors de la réception d'un signal de sécurité d'énergie auxiliaire, comme un signal de purge d'air, se déplace dans une position de sécurité prédéterminée, comprenant :
- une entrée (19) pour recevoir un signal de commande et/ou de régulation électrique (i), comme un signal live zéro,
- une sortie (15) pour émettre le signal de sortie d'énergie auxiliaire pour commander l'organe de réglage (3),
- un convertisseur d'électricité/énergie auxiliaire, comme un convertisseur I/P (13), qui génère le signal de sortie d'énergie auxiliaire dépendant du signal de commande et/ou de régulation électrique (i), **caractérisé par**
- un circuit de sécurité électrique (37) disposé entre l'entrée (19) et le convertisseur d'électricité/d'énergie auxiliaire qui en fonction du signal de régulation et/ou commande électrique (i) reçu par l'appareil de terrain peut être amené d'un état de commutation passif à un état de commutation actif, dans lequel le circuit de sécurité électrique (37) donne instruction au convertisseur d'électricité/d'énergie auxiliaire d'émettre le signal de sécurité d'énergie auxiliaire, **caractérisé en outre en ce que** le circuit de sécurité (37) est ensuite amené automatiquement dans l'état de commutation actif, lorsque le signal de régulation et/ou de commande électrique (i) sous dépasse ou dépasse une valeur seuil de tension et/ou d'intensité de courant spécifique au circuit de sécurité (37), dans lequel l'appareil de terrain présente une électronique (51) pour contrôler le fonctionnement de l'appareil de terrain pouvant être commandée, branché en amont du circuit de sécurité électrique (37) et branchée en aval de l'entrée (19), individuelle à l'appareil de terrain et **en ce que** l'électronique de contrôle (51) peut être commutée d'un état de repos passif à un état de contrôle actif, dans lequel l'électronique de contrôle (51) modifie le signal de régulation et/ou de commande électrique (i) reçu sur l'appareil de terrain et à alimenter dans le circuit de sécurité électrique (37) pour former un signal de contrôle électrique d'une intensité de courant et/tension déterminée et/ou pouvant être déterminé qui est alimenté dans le circuit de sécurité électrique (37), **caractérisé par** un module logique ET (41), qui est relié du côté d'entrée tant avec une sortie (5.3) d'un microprocesseur (5) qu'avec une sortie du circuit de sécurité électrique (37) et conçu afin d'émettre un signal de sécurité électrique pour déplacer l'organe de réglage (3) dans la position de sécurité sur le convertisseur d'électricité/énergie auxiliaire, seulement lorsque l'intensité de courant et/ou la tension sur la sortie du microprocesseur (5) et/ou du circuit de sécurité (37) sous dépasse ou dépasse une valeur seuil spécifique au module logique, de sorte que le signal de sécurité d'énergie auxiliaire soit émis par le convertisseur d'électricité/d'énergie auxiliaire.

9. Appareil de terrain selon la revendication 8, **caractérisé en ce que** le microprocesseur (5) est relié par l'intermédiaire de son entrée (5.1) avec l'entrée d'appareil de terrain de manière à transmettre des signaux de telle sorte que le signal de régulation et/de commande électrique (i) reste essentiellement inchangé même lorsque l'électronique de contrôle (51) est branchée dans un état de contrôle afin d'alimenter en énergie électrique le microprocesseur (5).

10. Appareil de terrain selon la revendication 8 ou 9, **caractérisé en ce que** l'électronique de contrôle (51) est commandée en vue de sa commutation dans l'état de contrôle et/ou dans l'état de repos passifs par le microprocesseur (5) de l'appareil de terrain et/ou **en ce que** l'électronique de contrôle (51) peut-être commandée en vue de sa commutation dans l'état de contrôle et/ou dans l'état de repos passif manuellement par un opérateur notamment à partir du côté extérieur d'un boîtier de l'appareil de terrain de préférence par l'actionnement manuel d'un élément de manipulation situé du côté extérieur, comme un bouton, et/ou **en ce que** l'électronique de contrôle (51) dans son état de contrôle abaisse de manière ajustable l'intensité de courant présente sur le circuit de sécurité électrique (37).

11. Appareil de terrain selon une des revendications 8 à 10, **caractérisé en ce que** l'électronique de contrôle (51) présente une résistance modifiable notamment en continu, notamment une résistance de limitation de courant et/ou un élément semi-conducteur notamment un transistor à effet de champ dans lequel notamment l'électronique de contrôle (51) présente un interrupteur disposé en série avec la résistance et/ou avec l'élément de semi-conducteur.

12. Appareil de terrain selon une des revendications 8 à 11, **caractérisé en ce que** l'appareil de terrain présente une ligne de boucle d'entrée de courant (21) disposée entre l'entrée (19) et la sortie (15), sur lequel est présent le signal de régulation et/ou de commande électrique (i) notamment de 4 à 20 mA, dans lequel l'électronique de contrôle (51) est disposée dans une ligne de courant, qui en l'état de contrôle est branchée en parallèle à la ligne de boucle d'entrée de courant (21), dans lequel notamment dans la ligne de boucle d'entrée de courant (21) une résistance et une diode de limitation de tension, comme une diode Zener (23) est disposée.

13. Appareil de terrain selon une des revendications 8 à 12, **caractérisé en ce que** un appareil de mesure (29) enregistre le signal de contrôle et est reliée avec le microprocesseur (5) de l'appareil de terrain pour transmettre, notamment pour mémoriser et/ou évaluer le signal de contrôle enregistré, dans lequel notamment l'appareil de mesure (29) est un circuit de mesure de courant qui est branché notamment en parallèle à l'électronique de contrôle (51) et présente de préférence un amplificateur de fonctionnement.

14. Appareil de terrain selon une des revendications 8 à 13, **caractérisé en ce que** il présente un capteur de position, dont le signal de position est reçu par le microprocesseur (5) de l'appareil de terrain, qui surveille notamment le circuit de sécurité électrique (37) afin de déterminer si et/ou à partir de quel signal de contrôle le circuit de sécurité électrique s'amorce.

15. Appareil des terrains selon une des revendications 8 à 14, **caractérisé en ce que** le module logique ET (41) est conçu afin d'émettre un signal de sécurité électrique pour déplacer l'organe de réglage (3) dans la position de sécurité sur le convertisseur d'électricité/énergie auxiliaire, seulement lorsque une intensité de courant d'environ 0,0 mA est présente sur la sortie du microprocesseur (5) et/ou de l'interrupteur.

16. Appareil de terrain selon une des revendications 8 à 15, **caractérisé en ce que** au moins un composant électronique, comme le microprocesseur (5), une erreur de données, un appareil de mesure de signal, un capteur etc. de l'appareil de terrain est alimenté électriquement exclusivement par l'intermédiaire du signal. de régulation et/ou de commande électrique (i) et/ou **en ce que** le convertisseur d'électricité/énergie auxiliaire, le circuit de sécurité électrique (37) et électronique de contrôle (51), de préférence également le microprocesseur (5), sont enfermés dans un boîtier de régulateur de position (11) hermétiquement fermé.
